# EUROPEAN PATENT APPLICATION

(11) **EP 3 288 151 A1**
(43) Date of publication of application: **28.02.2018**
(21) Application number: 16783389.6
(22) Date of filing: 20.04.2016
(51) Int. Cl.: H02J 50/00, H04W 36/30

(54) **NETWORK-BASED WIRELESS POWER CONTROL METHOD, AND WIRELESS POWER CONTROL DEVICE AND SYSTEM**

(30) Priority: 22.04.2015 KR 20150056300
(71) Applicant: LG Innotek Co., Ltd., Seoul, 04637 (KR)
(72) Inventor: PARK, Su Bin, Seoul 04637 (KR); PARK, Soo Young, Seoul 04637 (KR); LEE, Jong Heon, Seoul 04637 (KR)
(74) Representative: DREISS Patentanwälte PartG mbB
(86) International application number: PCT/KR2016/004090
(87) International publication number: WO 2016/171456

(57) **Abstract**

The purpose of the present invention relates to a network-based wireless power control method, and a device and a system therefor. A wireless power control method, in a wireless power transmission device which wirelessly transmits power to a wireless power reception device, according to a first embodiment of the present invention, comprises the steps of: transmitting a first signal via a first frequency band when a power source is applied; when a second signal corresponding to the first signal is received via a second frequency band, measuring the first reception sensitivity of the second signal; receiving second to n-th reception sensitivities corresponding to the second signal from at least one other wireless power transmission device connected via a network; and determining whether power has been wirelessly transmitted to the wireless power reception device, on the basis of the first to n-th reception sensitivities. As such, the present invention has an advantage of being capable of more effectively transmitting power wirelessly by using a wireless power transmission device connected via a network.

## Description

### [Technical Field]

Embodiments relate to a network-based wireless power transmission technology, and more particularly, to a network-based wireless power control method that enables seamless power transmission to a moving wireless power reception apparatus through cooperation between network-connected wireless power transmission apparatuses, and an apparatus and system therefor.

### [Background Art]

Recently, as information and communication technology rapidly develops, a ubiquitous society based on information and communication technology is being formed.

In order for information communication devices to be connected anywhere and anytime, sensors equipped with a computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort for users. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field and the resonance effect. Back in the 1800s, an electric motor or a transformer based on electromagnetic induction began to be used. Thereafter, a method of transmitting electric energy by radiating electromagnetic waves such as radio waves or lasers was tried. The principle of electromagnetic induction also forms the basis of charging electric toothbrushes we often use and some wireless shavers.

Up to now, wireless energy transmission schemes may be broadly classified into electromagnetic induction, electromagnetic resonance, and power transmission using a short-wavelength radio frequency.

In the electromagnetic induction scheme, when two coils are arranged adjacent to each other and a current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is 1 cm or less. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic waves. However, this scheme may be used only over a limited distance and in a limited space, and has somewhat low energy transfer efficiency.

The short-wavelength wireless power transmission scheme (simply, RF scheme) takes advantage of the fact that energy can be transmitted and received directly in the form of radio waves. This technology is an RF power transmission scheme using a rectenna. A rectenna, which is a compound of "antenna" and "rectifier", refers to a device that converts RF power directly into direct current (DC) power. That is, the RF method is a technology for converting AC radio waves into DC waves. Recently, with improvement in efficiency, commercialization of RF technology has been actively researched.

Wireless power transmission technology can be applied to various industries such as the IT industry, the railroad industry, and the home appliance industry as well as personal portable devices such as smartphones.

However, the conventional wireless power transmission system merely transmits power to a wireless power receiver placed on a wireless charging pad or the like, but does not provide a method of effectively transmitting power to a moving receiver.

### [Disclosure]

### [Technical Problem]

It is an object of the present disclosure to provide a network-based wireless power control method and an apparatus and system therefor.

It is another object of the present disclosure to provide a network-based wireless power control method and system capable of transmitting seamless power according to movement of a wireless power receiver.

It is another object of the present disclosure to provide a network-based wireless power control method and system capable of maximizing power transmission efficiency in a wireless power transmission system in which a plurality of wireless power transmission apparatuses is connected to a network.

The technical objects that can be achieved through the embodiments are not limited to what has been particularly described hereinabove and other technical objects not described herein will be more clearly understood by persons skilled in the art from the following detailed description.

### [Technical Solution]

Embodiments provide a network-based wireless power control method and an apparatus and system therefor.

In a first embodiment, a method for controlling wireless power by a wireless power transmission apparatus for wirelessly transmitting power to a wireless power reception apparatus may include transmitting a first signal through a first frequency band when power is applied, measuring, when a second signal corresponding to the first signal is received through the second frequency band, a first reception sensitivity of the second signal, receiving second to n-th reception sensitivities corresponding to the second signal from at least one other wireless power transmission apparatus connected to a network, a reception sensitivity, and determining whether to transmit wireless power to the wireless power reception apparatus based on the first to n-th reception sensitivities.

Here, when transmission of the wireless power to the wireless power reception apparatus is determined, the wireless power may be transmitted through the first frequency band.

The method may further include determining a target wireless power transmission apparatus when the first reception sensitivity falls below a reference value during transmission of the wireless power, wherein a handover request message including characteristics and state information about the wireless power reception apparatus may be transmitted to the determined target wireless power transmission apparatus over the network.

The method may further include determining a target wireless power transmission apparatus when efficiency of power transmission to the wireless power reception apparatus falls below a reference value during transmission of the wireless power, wherein a handover request message including characteristics and state information about the wireless power reception apparatus may be transmitted to the determined target wireless power transmission apparatus over the network.

Here, the characteristics and state information about the wireless power reception apparatus may include at least one of reception sensitivity information about the second signal, identification information about the wireless power reception apparatus, information about a current and a voltage required by the wireless power reception apparatus, information about a charging state of the wireless power reception apparatus, information about a version of software installed on the wireless power reception apparatus, authentication and security information about the wireless power reception apparatus, neighboring and/or candidate wireless power transmission apparatus list information corresponding to the wireless power reception apparatus, sub-in-band channel allocation information allocated to the wireless power reception apparatus, and connection information about the second frequency band corresponding to the wireless power reception apparatus.

In addition, when the handover request message is received by the target wireless power transmission apparatus, the target wireless power transmission apparatus may initiate transmission of the wireless power to the wireless power reception apparatus without performing a separate identification procedure for the wireless power reception apparatus.

The method according to the first embodiment may further include generating a list of candidate wireless power transmission apparatuses based on the first to n-th reception sensitivities, wherein the target wireless power transmission apparatus may be determined from the list of candidate wireless power transmission apparatuses.

Here, at least one wireless power transmission apparatus included in the list of candidate wireless power transmission apparatuses may be controlled to simultaneously supply the wireless power to the wireless power reception apparatus.

The method according to the fist embodiment may further include transmitting the first reception sensitivity to the at least one other wireless power transmission apparatus connected to the network.

In addition, when the first frequency band is a resonance frequency band, the second signal may be an advertisement signal broadcast by the wireless power reception apparatus.

When the first frequency band is a radio frequency band, the second signal may be received on an uplink shared channel defined in the second frequency band.

In a second embodiment, a method for controlling wireless power by a wireless power transmission controller operatively connected with first to n-th wireless power transmission apparatuses may include receiving reception sensitivity information for each of wireless power reception apparatuses connected to the first to n-th wireless power transmission apparatuses, determining at least one wireless power transmission apparatus to transmit power to the wireless power reception apparatus, using the reception sensitivity information, calculating the power to be transmitted to the wireless power reception apparatus by each of the determined at least one wireless power transmission apparatus, and transmitting a power transmission request message including the calculated power information to the determined wireless power transmission apparatus.

The method according to the second embodiment may further include receiving state information about the first to n-th wireless power transmission apparatuses, wherein the determining of the at least one wireless power transmission apparatus may be performed further using the state information.

Here, the state information may include at least one of information about a maximum transmission power intensity, information about the number of currently connected wireless power reception apparatuses, information about a maximum number of serviceable wireless power reception apparatuses, information about the available transmission power, and sub-in-band allocation information allocated for each of the connected wireless power reception apparatuses.

In addition, the determining of the at least one wireless power transmission apparatus may include allocating at least one wireless power transmission apparatus having the reception sensitivity greater than or equal to a first reference value for each of the wireless power reception apparatuses to a list of candidate wireless power transmission apparatuses, and extracting a wireless power transmission apparatus having the reception sensitivity greater than or equal to a second reference value from the list of candidate wireless power transmission apparatuses, wherein the power transmission request message may be transmitted to the extracted wireless power transmission apparatus.

In a third embodiment, a computer-readable recording medium on which a program for executing one of the wireless power control methods above is recorded may be provided

In a fourth embodiment, a wireless power control system may include first to n-th wireless power transmission apparatuses configured to transmit a first signal when power is applied, measure a reception sensitivity of a second signal corresponding to the first signal, and exchange information about the measured reception sensitivity over a network, and a wireless power reception apparatus configured to broadcast the second signal when the first signal is sensed, wherein the first to n-th wireless power transmission apparatuses may determine whether to transmit power to the wireless power reception apparatus based on the exchanged reception sensitivity.

Here, the first signal and the second signal may be transmitted and received through different frequency bands.

In addition, the network may be a wired or wireless IP communication network.

In addition, a serving wireless power transmission apparatus among the first to n-th wireless power transmission apparatuses may identify at least one candidate wireless power transmission apparatus based on the exchanged reception sensitivity, determine, when it is recognized that the reception sensitivity of the second signal is less than or equal to a reference value, a target wireless power transmission apparatus of the at least one candidate wireless power transmission apparatus, and transmit a predetermined handover request message to the determined target wireless power transmission apparatus.

Here, the handover request message may include characteristics and state information about the wireless power reception apparatus, wherein the target wireless power transmitter may not measure the reception sensitivities of the first signal transmission and the second signal, but may immediately initiate transmission of power to the wireless power reception apparatus using the characteristics and state information.

In another embodiment, a wireless power transmission apparatus for wirelessly transmitting power to a wireless power reception apparatus may include a power transmission unit configured to transmit, through a first frequency band, a first signal for sensing and identifying the wireless power reception apparatus, a first communication unit configured to receive a second signal corresponding to the first signal through a second frequency band, a reception sensitivity measurement unit configured to measure a first reception sensitivity of the second signal, a second communication unit configured to receive second to n-th reception sensitivities corresponding to the second signal from at least one other wireless power transmission apparatus connected to a network, and a controller configured to determine whether to transmit wireless power to the wireless power reception apparatus based on the first to n-th reception sensitivities.

The above-described aspects of the present disclosure are merely a part of preferred embodiments of the present disclosure. Those skilled in the art will derive and understand various embodiments reflecting the technical features of the present disclosure from the following detailed description of the present disclosure.

### [Advantageous Effects]

The method and apparatus according to the embodiments have the following effects.

First, according to embodiments, power may be seamlessly supplied to a wireless power reception apparatus that is moving.

Second, according to embodiments, wireless power may be quickly supplied to a moving wireless power reception apparatus through cooperation between network-connected wireless power transmission apparatuses.

Third, embodiments provide a network-based wireless power control method capable of maximizing power transmission efficiency by sharing characteristics and state information about a wireless power reception apparatus between network-connected wireless power transmission apparatuses, and an apparatus and system therefor.

It will be appreciated by those skilled in the art that that the effects that can be achieved through the embodiments of the present disclosure are not limited to those described above and other advantages of the present disclosure will be more clearly understood from the following detailed description.

### [Description of Drawings]

The accompanying drawings, which are included to provide a further understanding of the invention and are incorporated in and constitute a part of this application, illustrate embodiments of the disclosure and together with the description serve to explain the principle of the disclosure.
FIG. 1 is a diagram illustrating a wireless power control system according to an embodiment of the present disclosure.
FIGs. 2 to 5 specifically illustrate a method of seamlessly transmitting wireless power to a wireless power receiver that is moving according to an embodiment of the present disclosure.
FIG. 6 is a flowchart illustrating a wireless power transmission method according to an embodiment of the present disclosure.
FIG. 7 is a flowchart illustrating a handover procedure of a wireless power transmitter according to an embodiment of the present disclosure.
FIG. 8 illustrates configuration of a wireless power control system according to another embodiment of the present disclosure.
FIG. 9 is a flowchart illustrating a handover procedure of a wireless power transmitter according to another embodiment of the present disclosure.
FIG. 10 is a flowchart illustrating a wireless power transmission control method according to an embodiment of the present disclosure.
FIG. 11 is a block diagram illustrating the structure of a wireless power transmission apparatus according to an embodiment of the present disclosure.

### [Best Mode]

According to a first embodiment of the present disclosure, a wireless power control method in a wireless power transmission apparatus for wirelessly transmitting power to a wireless power reception apparatus includes transmitting a first signal through a first frequency band when power is applied, when a second signal corresponding to the first signal is received through a second frequency band, measuring a first reception sensitivity of the second signal, receiving second to n-th reception sensitivities corresponding to the second signal from at least one other network-connected wireless power transmission apparatus, and determining whether to transmit wireless power to the wireless power reception apparatus based on the first to n-th reception sensitivities.

### [Mode for Disclosure]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

In the description of the embodiments, it is to be understood that when an element is described as being "on" or "under" another element, it can be "directly" on or under another element or can be "indirectly" formed such that one or more other intervening elements are also present between the two elements. In addition, when an element is described as being "on" or "under," the term "on" or "under" may refer to not only the upper side but also the lower side with respect to the element.

In the description of the embodiments, "wireless power transmitter," "wireless power transmission apparatus," "transmission terminal," "transmitter," "transmission apparatus," "transmission side," and the like will be interchangeably used to refer to a wireless power transmission device constituting a wireless power control system, for simplicity. In addition, "wireless power reception apparatus," "wireless power receiver," "reception terminal," "reception side," "reception apparatus," "receiver," and the like will be interchangeably used to refer to a wireless power reception device, for simplicity.

The transmitter according to the present disclosure may be configured as a pad type, a cradle type, an access point (AP) type, a small base station type, a stand type, a ceiling embedded type, a wall-mounted type, or the like. One transmitter may include at least one wireless power transmission means to transmit power to a plurality of wireless power reception apparatuses. Here, the wireless power transmission means may use at least one of an electromagnetic resonance scheme, in which a magnetic field of a transmission coil is tuned to a specific resonance frequency to transmit power to a wireless power receiver located at a short distance, and a wireless power transmission scheme, in which low-power energy is transmitted to a remote receiver over an RF signal.

In the RF wireless power transmission scheme, the reception terminal may be equipped with a rectenna, which includes an antenna, a low-pass filter, a rectifier, a DC pass filter, and a load resistor. The antenna serves to receive an RF signal, and the received RF signal may be transmitted to the rectifier via the low-pass filter. The rectifier may include a Schottky diode, which is a nonlinear element, for example. A high-order mode of the received RF signal as well as DC power may be generated in the diode. The low-pass filter may be placed between the antenna and the diode to prevent re-emission of this high-order mode to the antenna. In addition, in the reception terminal, the DC pass filter may be placed between the diode and the load to prevent the RF signal from being transmitted to the load and control only the DC component to be transmitted to the load.

Further, the receiver according to embodiments may include a plurality of wireless power reception means, and may receive wireless power from two or more transmitters simultaneously. Here, the wireless power reception means may include the electromagnetic resonance scheme and the RF wireless power transmission scheme.

In addition, the wireless power transmission apparatus and the wireless power reception apparatus may perform communication using a separate out-of-band frequency different from the frequency band used for wireless power transmission. For example, short-range wireless communication technologies such as Bluetooth, near field communication (NFC), radio frequency identification (RFID), and Zigbee may be employed as the out-of-band frequency communication technology. As another example, mobile communication technologies such as Wideband Code Division Multiple Access (WCDMA), Long Term Evolution (LTE)/LTE-Advanced, and Wi-Fi may be employed as the out-of-band frequency communication technology.

A wireless power transmitter according to an embodiment may communicate with another wireless power transmitter over a network. Here, the network may be a wired or wireless IP communication network. For example, the wired network may include Ethernet, Local Area Network (LAN), and Controller Area Network (CAN). The wireless communication network may include a Wi-Fi communication network, a mobile communication network, a public frequency communication network, a Bluetooth communication network, and a Radio Frequency Identification (RFID) communication network.

When the wireless power transmitter is connected over Ethernet, the wireless power transmitter may be assigned an IP address and thus perform IP communication.

The wireless power receiver may also be assigned an IP address, and the wireless power transmitter and the wireless power receiver may perform out-of-band communication using the assigned IP addresses.

The wireless power receiver according to the present disclosure may be employed in small electronic devices such as a mobile phone, a smartphone, a laptop computer, a digital broadcast terminal, a PDA (Personal Digital Assistant), a PMP (Portable Multimedia Player), a navigation system, an MP3 player, and a wearable device. However, embodiments are not limited thereto, and the wireless power receiver may be employed in any devices which are provided with the wireless power reception means according to the present disclosure and are powered by a charged battery. A wireless power reception apparatus according to another embodiment of the present disclosure may also be employed in a robot, a vehicle, a drone, and the like which are provided with a wireless communication means. For example, the unmanned robot may be fixedly installed in a predetermined area in a factory, or may move within a certain area within the factory and receive wireless power from a wireless power transmission apparatus.

Alternatively, when an electric vehicle is traveling or stops at an intersection for a while, a wireless power transmission apparatus installed in the vicinity of the road may sense the above operations and transmit wireless power to the electric vehicle or the wireless power reception apparatus mounted in the electric vehicle.

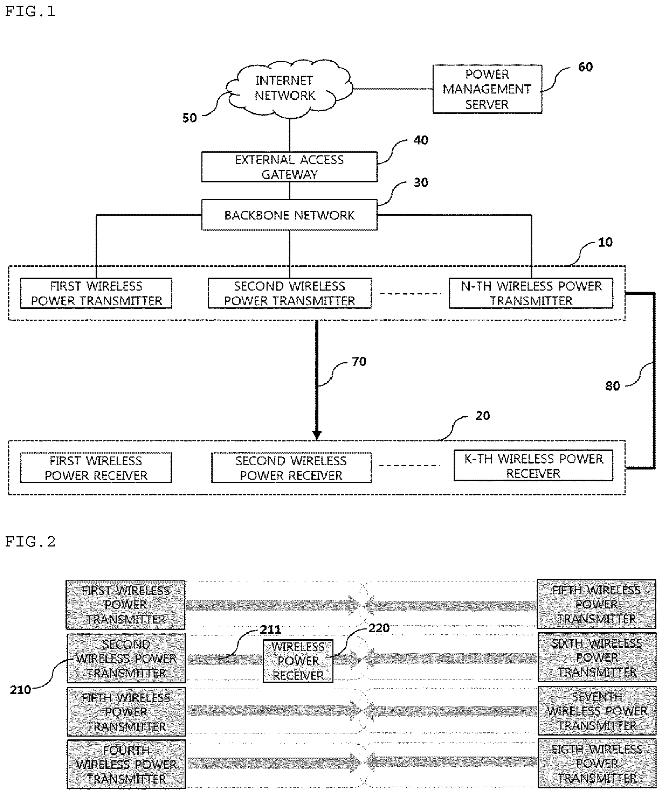

FIG. 1 is a diagram illustrating a wireless power control system according to an embodiment of the present disclosure.

Referring to FIG. 1, a wireless power control system according to an embodiment may include at least one of first to n-th wireless power transmitters 10, first to k-th wireless power receivers 20, a backbone network 30, an external access gateway 40, an Internet network 50, and a power management server 60.

The first to n-th wireless power transmitters 10 may transmit wireless power 70 to the corresponding wireless power receivers using a first frequency band, and exchange a control signal 80 for wireless power control with the first to k-th wireless power receivers 20 using a second frequency band.

Hereinafter, the first frequency band and the second frequency band are used interchangeably with an in-band 70 and an out-of-band 80, respectively.

Here, in-band may refer to a frequency band in which wireless power is actually transmitted, and may be a channel through which a unidirectional wireless power signal is transmitted. On the other hand, out-of-band may refer to a frequency band allocated to bidirectional wireless communication technology for exchanging control information necessary for wireless power transmission and various data. For example, when the wireless power is transmitted in the resonance scheme, the in-band may be a resonance frequency band. When the control signal is exchanged through Bluetooth communication, the out-of-band may be a standard frequency band allocated to Bluetooth communication.

In addition, the wireless power transmitter and the wireless power receiver may include various sensors, and various sensing information sensed by the sensors may be exchanged between the wireless power transmitter and the wireless power receiver on an out-of-band communication channel.

The wireless power transmitter and the wireless power receiver may also exchange state information about the transmitter andr the receiver as well as various control signals for power control through out-of-band communication.

Here, the state information about the transmitter may include at least one of maximum transmission power intensity information, available power information, information about the number of available receivers, information about change in the available power, and information about supportable wireless power transmission schemes.

The state information about the receiver may include at least one of information about the charging state, charging completion information, reference voltage and/or current information, information about power reception efficiency, information about the version of the embedded software, and information about supportable wireless power transmission schemes.

The wireless power transmitter and the wireless power receiver may also transmit and receive multimedia data, including, for example, moving pictures, sound sources, images, and text, via out-of-band communication. Here, transmission/reception of the multimedia data may be controlled based on the charging state of the wireless power receiver. For example, when the charging level of the wireless power receiver is higher than or equal to a reference value, transmission/reception of predetermined multimedia data may be performed.

The in-band according to an embodiment may be divided into a plurality of sub-in-bands, and a wireless power transmitter may transmit wireless power to a wireless power receiver using at least one sub-in-band. In this operation, the wireless power transmitter may minimize frequency interference by allocating different sub-in-bands to the respective wireless power receivers. A guard frequency band may be inserted between adjacent sub-in-bands to minimize interference between adjacent frequencies.

A wireless power receiver to receive wireless power from two wireless power transmitters simultaneously may receive and synthesize wireless powers from the two wireless power transmitters simultaneously using the same sub-in-band.

The first to n-th wireless power transmitters 10 may exchange control information with each other over the backbone network 50. The first to n-th wireless power transmitters 10 may also communicate with an external server (e.g., the power management server 60) over the backbone network 50.

The power management server 60 may collect the current wireless power transmission state information about the first to n-th wireless power transmitters 10 and statistically process the information. Here, the wireless power transmission state information may include current transmission power information, information about the number of connected wireless power receivers, available power information, power allocation information about each wireless power receiver, and charging state information about each wireless power receiver. The power management server 60 may determine, based on the result of the statistical processing, whether a wireless power transmitter is added/changed/removed and whether redesign of arrangement of the wireless power transmitters is necessary.

The first to n-th wireless power transmitters 10 may exchange the characteristics and state information about the first to k-th wireless power receivers 20 over the backbone network 50 through at least one predetermined control message. Here, the receiver characteristics and state information may include information about reception sensitivity to an advertisement signal, receiver identification information, receiver required current and voltage information, receiver charging state information, such as, for example, total charging level information, current charging voltage/current information, and total charging time information, receiver software version information, authentication and security information, neighbor and/or candidate transmitter list information, sub-in-band channel allocation information about each receiver, and second frequency band access information.

According to exchange of the receiver characteristics and state information, the first to n-th wireless power transmitters 10 may not only more quickly identify the wireless power receivers to transmit wireless power, but also seamlessly transmit wireless power to a moving wireless power receiver.

For example, when a wireless power receiver receiving power from a first wireless power transmitter moves to a transmission coverage of a second wireless power receiver, the first wireless power transmitter may transmit the receiver characteristics and state information about the corresponding wireless power receiver to the second wireless power receiver over the backbone network 30. At this time, the second wireless power transmitter may immediately start power transmission based on the received receiver state information, without performing a separate receiver detection procedure and a separate receiver identification procedure.

In particular, while the wireless power receiver is located in an area where the transmission coverage of the first wireless power transmitter and the transmission coverage of the second wireless power transmitter overlap, the wireless power receiver may receive power from the first and second wireless power transmitters simultaneously. In this case, the first wireless power transmitter and the second wireless power transmitter may measure a reception sensitivity of a predetermined reference signal generated by the wireless power receiver, and exchange information about the measured reception sensitivity with each other over the backbone network 30. Subsequently, the first wireless power transmitter and the second wireless power transmitter may determine a power transmission ratio based on the reception sensitivity of the exchanged reference signal. The power transmission ratio in the first wireless power transmitter and the second wireless power transmitter may be determined by further considering at least one of the power currently available in the corresponding transmitter and the power required by the wireless power receiver.

For example, if the reception sensitivity of the reference signal sensed by the second wireless power transmitter is better than the reception sensitivity of the reference signal sensed by the first wireless power transmitter, it may be determined that the second wireless power transmitter has a better wireless power transmission environment than the first wireless power transmitter. As a result, a relatively large power may be transmitted to the corresponding wireless power receiver.

If the power for the second wireless power transmitter to transmit, which is determined according to the reception sensitivity of the reference signal, exceeds the available power of the corresponding transmitter, the second wireless power transmitter may transmit, to the first wireless power transmitter, a predetermined additional power transmission request signal including the exceeded amount. Subsequently, the first wireless power transmitter may change the strength of power to be transmitted to the wireless power receiver, based on the additional power transmission request.

When the out-of-band communication scheme according to an embodiment of the present disclosure is Bluetooth communication, the reference signal may be a Bluetooth beacon signal. Here, the Bluetooth beacon signal generated by the wireless power receiver may be an advertisement signal according to the present disclosure, and the reception sensitivity of the advertisement signal may be measured by the wireless power transmitter. Here, the wireless power receiver may transmit the advertisement data including advertisement data. Here, the advertisement data may include wireless power transmission service identifier information, power consumption class information about the wireless power receiver, and Bluetooth beacon output power intensity information.

Here, the wireless power transmission service identifier may be unique service identification information for identifying whether the wireless power receiver is a legitimate service subscription device. As an example, a specific wireless power receiver may be configured to receive power only from a specific wireless power transmitter. In this case, the wireless power transmitter may determine whether the wireless power receiver is a power transmission target device based on the wireless power transmission service identifier.

The power consumption class of the wireless power receiver may be used to determine whether the wireless power transmitter is capable of transmitting power corresponding to the current power consumption class based on the currently available power. If the power consumption class exceeds the currently available power, the wireless power transmitter may not include the wireless power receiver in the service target devices.

The Bluetooth beacon output power intensity information may be used as reference information for determining the reception sensitivity of the Bluetooth beacon. That is, the wireless power transmitter may measure the degree of signal attenuation by comparing the receive power intensity of the Bluetooth beacon with the Bluetooth beacon output power intensity, and determine the reception sensitivity according to the measured degree of signal attenuation. In one embodiment, the wireless power transmitter may measure the degree of signal attenuation in units of dBm (decibels above 1 milliwatt), and determine that the degree of signal attenuation is inversely proportional to reception sensitivity.

According to another embodiment of the present disclosure, a reference signal may be generated by a wireless power transmitter. In this case, the wireless power receiver may measure the reception sensitivities of reference signals for the respective wireless power transmitters to identify reference signals having a reception sensitivity that is greater than a reference value, and transmit the identified wireless power transmitter-specific reception sensitivity information to the wireless power transmitters on the out-of-band channel 80. Subsequently, the wireless power transmitter may determine the power to transmit to the wireless power receiver based on the received reception sensitivity information.

While it is illustrated in FIG. 1 that the wireless power transmitters exchange information over the wired backbone network 30, this is merely one embodiment. It should be noted that a wireless power transmitter according to another embodiment of the present disclosure is capable of exchanging information through wireless communication. Here, the wireless communication may be any one of Wi-Fi communication, Bluetooth communication, RFID communication, WCDMA communication, and LTE/LTE-A communication.

Hereinafter, a method of seamlessly transmitting wireless power to a moving wireless power receiver will be described in detail with reference to FIGs. 2 to 5. It should be noted that Bluetooth communication is described as an example of out-of-band communication, but embodiments are not limited thereto.

As shown in FIG. 2, it is assumed that a wireless power receiver 220 is located within the coverage area of a second wireless power transmitter 210.

The second wireless power transmitter 210 may periodically transmit a predetermined detection signal 211 for detecting and identifying the wireless power receiver 220 through the in-band. For example, when the in-band is a resonance frequency band, the detection signal may be a beacon signal having a periodic pattern for a unit time. Here, the beacon signal may include a first beacon signal for sensing presence of a wireless power receiver and a second beacon signal for identifying the sensed wireless power receiver.

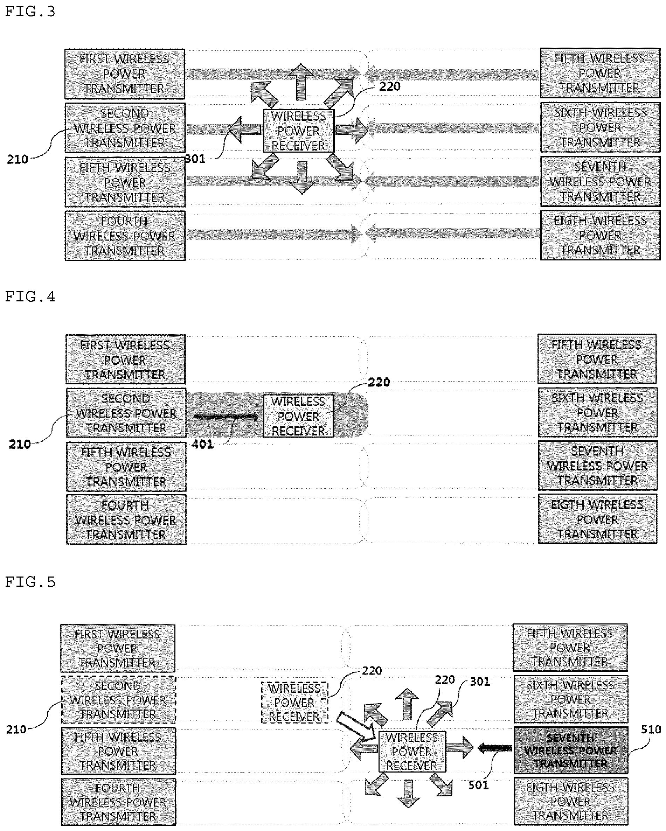

Referring to FIG. 3, when the detection signal 211 is sensed, the wireless power receiver 220 may broadcast a predetermined advertisement signal 301 on the Bluetooth channel.

Here, it should be noted that, when power is applied, the Bluetooth function of the wireless power transmitter is automatically activated, and the advertisement signal 301 broadcast by the wireless power receiver may be sensed.

When the advertisement signal 301 is sensed on the Bluetooth channel, the second wireless power transmitter 210 may measure the reception sensitivity of the advertisement signal and exchange information about the measured reception sensitivity with other network-connected wireless power transmitters.

At this time, a wireless power transmitter having the highest reception sensitivity may be determined as a serving wireless power transmitter based on the exchanged information about the reception sensitivity. In addition, a predetermined number of wireless power transmitters with the next highest reception sensitivity may be determined as candidate wireless power transmitters.

Referring to FIG. 3, the second wireless power transmitter 210 may be the serving wireless power transmitter, and the first wireless power transmitter and the third wireless power transmitter adjacent thereto may be candidate wireless power transmitters. It should be noted that the candidate wireless power transmitter may, if necessary, cooperate with the serving wireless power transmitter to transmit wireless power to the wireless power receiver 220. As an example, if transmittable power of the second wireless power transmitter 210, which is the serving wireless power transmitter, fails to meet the required power of the wireless power receiver 220, the second wireless power transmitter 210 may send, to the candidate wireless power transmitters, a request for power transmission to the wireless power receiver 220. Here, the power requested to the candidate wireless power transmitters may be determined so as to meet the required power of the wireless power receiver 220.

The number of candidate wireless power transmitters per wireless power receiver may be preset in the wireless power transmitter using predetermined system parameters. Each wireless power transmitter may determine whether the wireless power transmitter itself is a serving transmitter or a candidate transmitter based on the information about the preset number of candidate wireless power transmitters and the information about the reception sensitivity of the exchanged advertisement signal. The result of determining whether the wireless power transmitter is a serving/candidate transmitter may be shared among the wireless power transmitters over a wired or wireless network.

If the second wireless power transmitter 210 is determined as a serving wireless power transmitter, the second wireless power transmitter 210 may transmit wireless power 401 to the wireless power receiver 220 through the in-band as shown in FIG 4. In this operation, the second wireless power transmitter 210 may establish a Bluetooth connection with the wireless power receiver 220, and the transmitter and the receiver may exchange state information thereon through the established Bluetooth communication connection. The second wireless power transmitter 210 may dynamically control the intensity of the transmission power based on the state information received from the wireless power receiver 220.

As shown in FIG. 5, the wireless power receiver 220 may move from the transmission coverage of the second wireless power transmitter 210 to the transmission coverage of a seventh wireless power transmitter 510. In this case, if the reception sensitivity of the Bluetooth beacon signal received from the wireless power receiver 220 falls below a predetermined handover reference value, the second wireless power transmitter 210 may transmit a handover request signal including pre-collected characteristics and state information about the wireless power receiver 220 collected by the base station to another network-connected wireless power transmitter (e.g., the seventh wireless power transmitter 510) .

According to an embodiment, when it is confirmed that the reception efficiency of the power received from the second wireless power transmitter 210 falls below a predetermined reference value, the wireless power receiver 220 may automatically broadcast the advertisement signal 301.

In this case, when it is confirmed that the reception sensitivity of the advertisement signal 301 is higher than or equal to a reference value, the seventh wireless power transmitter 510 may establish a Bluetooth communication connection with the wireless power receiver 220 and begins to transmit wireless power 501 through the in-band. At this time, it should be noted that a wireless power transmitter having the reception sensitivity of the advertisement signal 301 lower than or equal to a reference value does not transmit wireless power to the wireless power receiver 220.

Establishing the Bluetooth communication connection may be simplified by referring to the Bluetooth communication related configuration information included in the characteristics and state information about the wireless power receiver 220 pre-collected in a source wireless power transmitter. For example, Bluetooth communication related configuration information (i.e., existing paired transmitter parameters) included in the characteristics and state information about the wireless power receiver 220 pre-collected in the source wireless power transmitter may be used, and a message requesting the state information about the receiver may be transmitted while transmitting power.

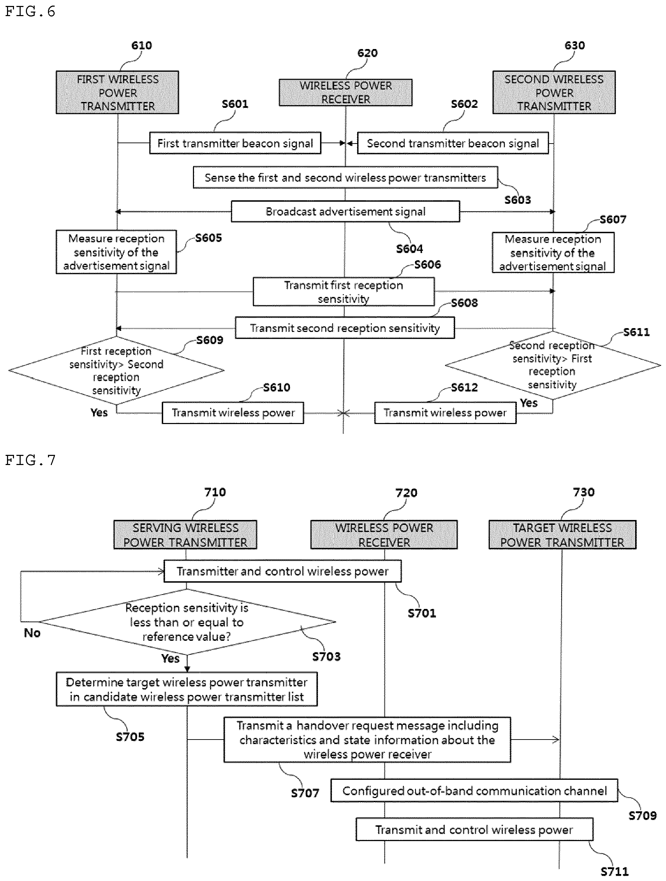

FIG. 6 is a flowchart illustrating a wireless power transmission method according to an embodiment of the present disclosure. Specifically, FIG. 6 illustrates a method of seamlessly transmitting power to a moving wireless power receiver through a plurality of network-connected wireless power transmitters.

Referring to FIG. 6, a first wireless power transmitter 610 and a second wireless power transmitter 630 may transmit a predetermined beacon signal for sensing and identifying a wireless power receiver 620 when powered on (S601 and S602).

The wireless power receiver 620 may broadcast an advertisement signal when the beacon signals transmitted by the first wireless power transmitter 610 and the second wireless power transmitter 630 are sensed (S603 and S604).

When the advertisement signal is sensed, the first wireless power transmitter 610 may measure the reception sensitivity of the advertisement signal and transmit the measured reception sensitivity (hereinafter, referred to as a first reception sensitivity) to the second wireless power transmitter 630 connected to a network (S605 and S606).

When the advertisement signal is sensed, the second wireless power transmitter 620 may measure the reception sensitivity of the advertisement signal and transmit the measured reception sensitivity (hereinafter, referred to as a second reception sensitivity) to the first wireless power transmitter 610 connected to the network (S607 to S608).

If the first reception sensitivity is better than the second reception sensitivity, the first wireless power transmitter 610 may initiate wireless power transmission (S609 and S610).

If it is confirmed that the second reception sensitivity is greater than the first reception sensitivity, the second wireless power transmitter 630 may initiate wireless power transmission (S611 and S612).

While it is illustrated in FIG. 6 that two wireless power transmitters exchange the reception sensitivities of the advertisement signal with each other, and compare the reception sensitivity received from the other wireless power transmitter with the internally measured reception sensitivity to determine whether to perform wireless power transmission, this is merely one embodiment. In another embodiment of the present disclosure, two or more network-connected wireless power transmitters may exchange reception sensitivities of the advertisement signal with each other.

While it is described in the above embodiment that each of the wireless power transmitters transmits the reception sensitivity to the other wireless power transmitters and performs determination, a specific wireless power transmitter having a higher priority may receive and determine the reception sensitivities of the other wireless power transmitters to instruct other wireless power transmitters to perform power transmission or to directly transmit wireless power.

FIG. 7 is a flowchart illustrating a handover procedure of a wireless power transmitter according to an embodiment of the present disclosure.

Referring to FIG. 7, while a serving wireless power transmitter 710 transmits wireless power through the in-band, it may acquire receiver state information through the out-of-band and control the wireless power (S701). In this operation, the serving wireless power transmitter 710 may measure the reception sensitivity of an out-of-band reference signal received from a wireless power receiver 720.

If the measured reception sensitivity falls below a predetermined reference value, the serving wireless power transmitter 710 may determine that wireless power transmitter handover is needed (S703).

The serving wireless power transmitter 710 may determine a target wireless power transmitter in the list of candidate wireless power transmitters and transmit a handover request message containing the characteristics and state information about the wireless power receiver 720 to the determined target wireless power transmitter 730 (S705 to S707) .

In one example, the serving wireless power transmitter 710 may compare the received sensitivities of the previously collected candidate wireless power transmitters to the wireless power receiver 720 to determine a candidate wireless power transmitter with the highest received sensitivity as the target wireless power transmitter.

The target wireless power transmitter 730 may set an out-of-band communication channel based on the received characteristics and state information about the wireless power receiver 720, initiate wireless power transmission to the wireless power receiver 720, and receive receiver state information about the set out-of-band communication channel, thereby controlling the transmission power (S709 to S711).

In another embodiment of the present disclosure, it should be noted that the target wireless power transmitter 730 may initiate wireless power transmission based on the received characteristics and state information about the wireless power receiver 720 and then configure an out-of-band communication channel to perform transmission power control. As a handover request message including the characteristics and state information about the wireless power receiver 720 is transmitted as described above, the receiver may receive seamless power without a separate connection step or configuration step.

The information that may be dynamically changed in the characteristics and state information about the receiver that may be exchanged between the wireless power transmitters connected to the backbone network described in the embodiment of FIG. 1 may be transmitted in the handover request message. The target receiver may transmit power without receiving the dynamically changing information from the receiver. The dynamically changing information (dynamic parameters) may be, for example, at least one of the output voltage/current information about the rectifier of the wireless power receiver 720, the voltage/current information about the battery port or load, receiver temperature information, and minimum required voltage/current information about the rectifier of the wireless power receiver 720 in the characteristics and state information about the wireless power receiver 720.

For the dynamic parameters, the latest information stored in the source wireless power transmitter may be transmitted through the handover request message to the target wireless power transmitter.

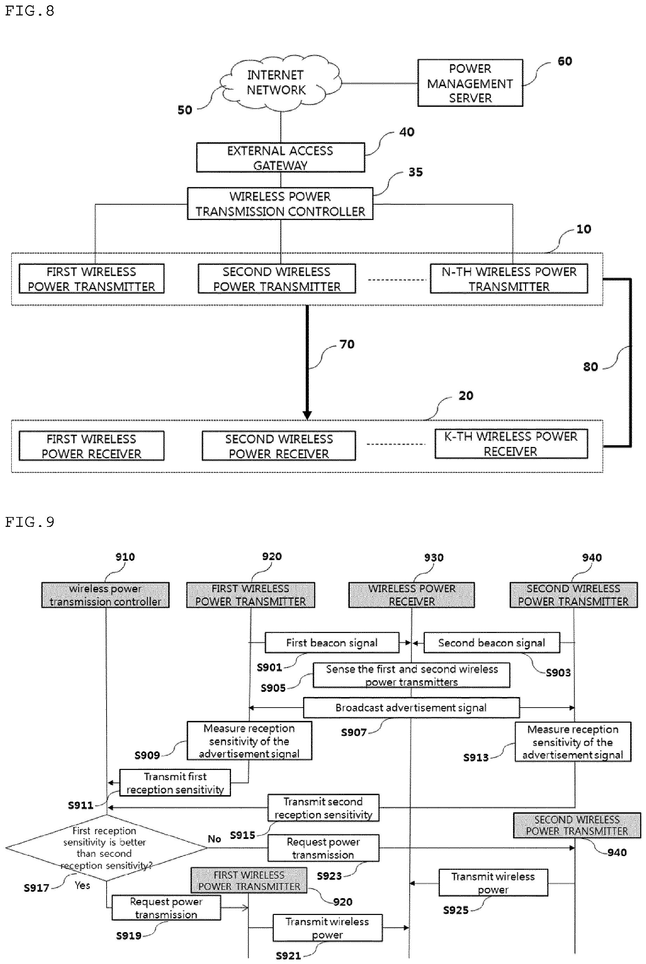

FIG. 8 illustrates configuration of a wireless power control system according to another embodiment of the present disclosure.

Referring to FIG. 8, the wireless power control system may include a wireless power transmission controller 35 operatively connected with the first to n-th wireless power transmitters 10.

The wireless power transmission controller 35 may collect characteristics and state information corresponding to the first to k-th wireless power receivers 20 from the first to the n-th wireless power transmitters 10, and identify a wireless power receiver that needs handover, based on the characteristics and state information.

The wireless power transmission controller 35 may determine the wireless power receiver that needs handover as a target wireless power transmitter. Subsequently, the wireless power transmission controller 35 may transmit, to the target wireless power transmitter, a predetermined handover request message including the characteristics and state information about the wireless power receiver to be handed over. The wireless power transmission controller 35 may also transmit a predetermined control signal to the serving wireless power transmitter to request interruption of power transmission to the wireless power receiver to be handed over.

The wireless power transmission controller 35 may be operatively connected with the power management server 60 via the external access gateway 40. For example, the wireless power transmission controller 35 may perform the authentication and security procedures on the first to k-th wireless power receivers 20 in operative connection with the power management server 60. Here, the authentication procedure is a procedure of identifying whether the corresponding wireless power receiver is a legitimate device or a device registered for service, and the security procedure may be a procedure of setting a security algorithm to be used for out-of-band communication 80 between the first to n-th wireless power transmitters 10 and the first to k-th wireless power receivers 20.

The wireless power transmission controller 35 may also perform the function of relaying the information exchanged between the wireless power transmitters.

For the other functions of the remaining components shown in FIG. 8, refer to the description of FIG. 1.

FIG. 9 is a flowchart illustrating a handover procedure of a wireless power transmitter according to another embodiment of the present disclosure.

Referring to FIG. 9, a first wireless power transmitter 920 and a second wireless power transmitter 940 may transmit a first beacon signal and a second beacon signal, respectively (S901 to S903).

A wireless power receiver 930 may broadcast an advertisement signal when the first beacon signal and/or the second beacon signal is sensed (S905 to S907).

When the advertisement signal is sensed, the first wireless power transmitter 920 may measure the reception sensitivity of the advertisement signal and transmit the measured reception sensitivity (hereinafter, referred to as a first reception sensitivity) to the wireless power transmission controller 910 (S909 to S911).

When the advertisement signal is sensed, the second wireless power transmitter 940 may measure the reception sensitivity of the advertisement signal and transmit the measured reception sensitivity (hereinafter, referred to as a second reception sensitivity) to the wireless power transmission controller 910 (S913 to S915).

If the first reception sensitivity is better than the second reception sensitivity, the wireless power transmission controller 910 may transmit, to the first wireless power transmitter 920, a predetermined control signal requesting power transmission to the wireless power receiver 930 (S917 to S919). Subsequently, the first wireless power transmitter 920 may initiate wireless power transmission to the wireless power receiver 930 (S921).

In step 917, if the second reception sensitivity is better than the first reception sensitivity, a predetermined control signal requesting power transmission to the wireless power receiver 930 may be transmitted to the second wireless power transmitter 940 (S923). Subsequently, the second wireless power transmitter 940 may initiate wireless power transmission to the wireless power receiver 930 (S925).

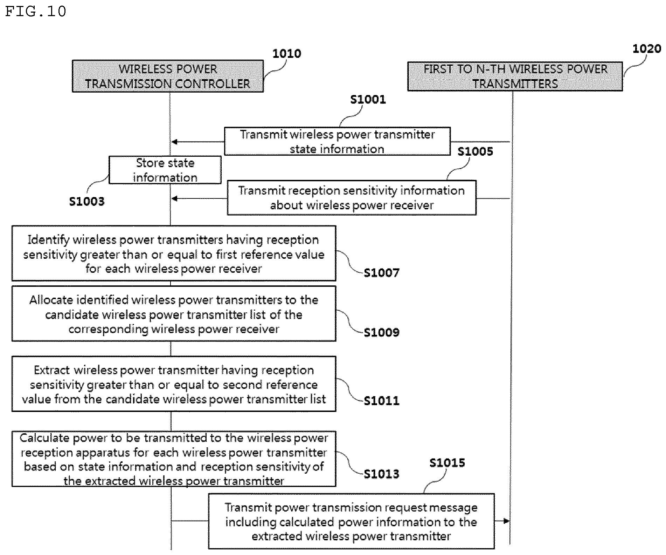

FIG. 10 is a flowchart illustrating a wireless power transmission control method according to an embodiment of the present disclosure.

Referring to FIG. 10, first to n-th wireless power transmitters 1020 may transmit state information about the wireless power transmitters to a wireless power transfer controller 1010. Here, the real-time wireless power transmitter state information may include at least one of maximum transmission power intensity information, information about the number of currently connected wireless power receivers, information about the maximum number of serviceable wireless power receivers, information about the available transmission power, and sub-in-band allocation information assigned to each of the connected receivers. Here, in the state information about the wireless power transmitter, the state of the wireless power transmitter may be changed or may be transmitted to the wireless power transmission controller 1010 with a preset periodicity.

The received wireless power transmitter state information may be stored and maintained in an internal memory of the wireless power transmission controller 1010 (S1003).

The first to n-th wireless power transmitters 1020 may also transmit the reception sensitivity information corresponding to the wireless power receivers to the wireless power transmission controller 1010.

The wireless power transmission controller 1010 may identify a wireless power transmitter having a reception sensitivity greater than or equal to a first reference value for each wireless power receiver and may allocate the identified wireless power transmitter to a list of candidate wireless power transmitters corresponding to the wireless power receiver (S1007 to S1009).

The wireless power transmission controller 1010 may extract wireless power transmitters with a reception sensitivity greater than or equal to a second reference value from the list of candidate wireless power transmitters and transmit information about power to be transmitted to the corresponding wireless power receiver according to each wireless power transmitter (which may include, for example, at least one of initial transmission power intensity information, maximum transmission power intensity information, minimum transmission power intensity information, information about the amount of power to be charged, power transmission ratio) based on the extracted state information and/or reception sensitivity of the wireless power transmitter (S1011 to S1013).

In one example, the wireless power transmission controller 1010 may allocate more power to a wireless power transmitter with better reception sensitivity to the advertisement signal. That is, the wireless power transmission controller 1010 may control more power to be charged by a wireless power transmitter expected to have better wireless power transmission efficiency.

It should be noted that in another example, the wireless power transmission controller 1010 is capable of determining the power transmission ratio of the respective wireless power transmitters based on the currently available power the wireless power transmitters as well as the reception sensitivities.

The wireless power transmission controller 1010 may transmit a power transmission request message including the calculated power information to the corresponding wireless power transmitter (S1015).

While the in-band has been described as being a resonance frequency band an example, this is merely one embodiment. In the case where the in-band according to another embodiment of the present disclosure is an RF frequency band, the signal used to identify the wireless power receivers may be a pilot signal for transmitting a continuous RF signal with a constant strength. In this case, the wireless power receiver may broadcast a predetermined advertisement message for out-of-band communication connection on a predetermined uplink shared channel if the strength of the pilot is detected to be greater than or equal to a reference value. Here, the uplink shared channel may be automatically activated when power is applied to the wireless power reception apparatuses on a wireless transmission channel shared by all wireless power receivers included in the wireless power control system.

In the example of FIG. 10 it is illustrated that the wireless power transmission controller 1010 identifies a wireless power transmitter to transmit power to the wireless power reception apparatus based on the reception sensitivity information about the advertisement signal of the wireless power reception apparatus measured by the wireless power transmitter and calculate information related to the power to be transmitted to the corresponding wireless power reception apparatus for each identified wireless power transmitter. However, this is merely an embodiment. In another embodiment of the present disclosure, the first wireless power transmitter may receive state information about the second to n-th wireless power transmitters and the reception sensitivity information about the wireless power receivers connected to the wireless power transmitters from the second to n-th wireless power transmitters, and determine a wireless power transmitter to transmit power to the corresponding wireless power receivers based on the received information. Thereafter, the wireless power transmitter may calculate information about the power to be transmitted to the corresponding wireless power receiver for each determined wireless power transmitter, and then transmit information about the calculated power to the determined wireless power transmitters.

According to another embodiment of the present disclosure, the wireless power transmission controller 1010 may receive information about the power transmission efficiency for each connected wireless power receiver from the first to n-th wireless power transmitters 1020. Here, the power transmission efficiency may be calculated by the transmitter or the receiver based on the receive power intensity at the receiver with respect to the transmit power intensity at the transmitter.

For example, the transmitter may receive the current receive power intensity information about the transmitter over the out-of-band communication channel, and calculate the power transmission efficiency in real time based on the information. In another example, the receiver may receive information about the transmit power intensity of the transmitter over the out-of-band communication channel and compare the same with the receive power intensity to calculate the power transmission efficiency. In this case, the receiver may transmit the information about the calculated power transmission efficiency to the transmitter over the out-of-band communication channel.

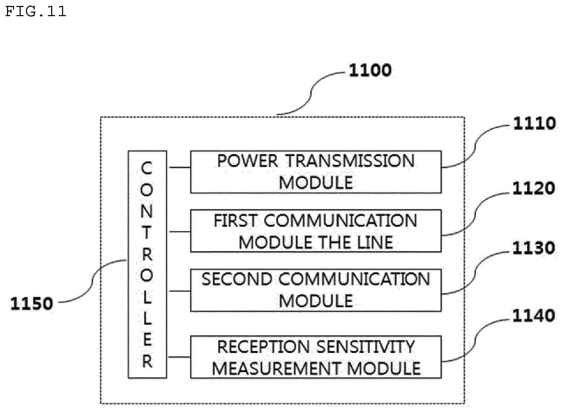

FIG. 11 is a block diagram illustrating the structure of a wireless power transmission apparatus according to an embodiment of the present disclosure.

Referring FIG. 11, a wireless power transmission apparatus 1100 may include a power transmission unit 1110, a first communication unit 1120, a second communication unit 1130, a reception sensitivity measurement unit 1140, and a controller 1150.

When power is applied to the wireless power transmission apparatus 1100, the power transmission unit 1110 may transmit a first signal through a first frequency band under control of the controller 1120. Here, the first frequency band may include a resonance frequency band or (and) RF band, and the first signal may be a signal for sensing and identifying the wireless power receiver.

For example, if the first frequency band is a resonance frequency band, the first signal may be a beacon signal transmitted in a predefined pattern for a predetermined period of time at regular intervals.

In another example, if the first frequency band is an RF band, the first signal may be a continuous pilot signal of a constant strength. Here, the pilot signal may include predetermined transmitter identification information for identifying the wireless power transmission apparatus 1100.

According to another embodiment of the present disclosure, the first signal may further include a synchronization signal as well as a pilot signal. Here, the synchronization signal may provide not only the transmitter identification information but also the timing information on connection to the corresponding wireless power transmission apparatus 1100.

According to another embodiment of the present disclosure, the first signal may include a pilot signal, a synchronization signal, and a broadcast signal. Here, the broadcast signal may be transmitted in the state information about the wireless power transmitter. Here, the state information about the wireless power transmitter may include information on the maximum power intensity that may be provided by the wireless power transmitter, information on the type of wireless power receiver that may be provided, information on the maximum number of wireless power receivers that may be connected, and version information on software installed on the wireless power transmitter.

Transmitting the first signal over the first frequency band when power is applied;

The first communication unit 1120 may receive a second signal corresponding to the first signal through a second frequency band. For example, if the first frequency band is a resonance frequency band, the second signal may be an advertisement signal broadcast by the wireless power receiver. In another example, if the second frequency band is an RF band, the second signal may be an uplink pilot signal transmitted by the wireless power receiver or a preamble signal having a predetermined pattern. In another example, if the second frequency band is an RF band, the second signal may be received on an uplink shared channel defined in the second frequency band.

At this time, the reception sensitivity measurement unit 1140 may measure a first reception sensitivity of the second signal.

The second communication unit 1130 may receive second to n-th reception sensitivities corresponding to the second signals from at least one other wireless power transmission apparatus connected to the network.

The wireless power transmission unit 1100 may transmit the first reception sensitivity measured by the reception sensitivity measurement unit 1140 to other wireless power transmission apparatuses connected to the network.

The controller 1150 may determine whether to transmit wireless power to the corresponding wireless power reception apparatus based on the first to n-th reception sensitivities.

When wireless power transmission to the wireless power reception apparatus is determined, the controller 1150 may transmit a predetermined control signal to the power transmission unit 1120 and control wireless power to be transmitted through the first frequency band.

In addition, if the first reception sensitivity of the wireless power transmission falls below a predetermined reference value during wireless power transmission, the controller 1150 may determine a target wireless power transmission apparatus.

Subsequently, the controller 1150 may control a handover request message including the characteristics and state information about the corresponding wireless power reception apparatus to be transmitted to the target wireless power transmission apparatus determined through the second communication unit 1130.

Here, the characteristics and state information about the wireless power reception apparatus include the first to n-th reception sensitivities or the first reception sensitivity, identification information about the wireless power reception apparatus, information about the current and voltage required by the wireless power reception apparatus, charging state information about the wireless power reception apparatus, version information about the software installed in the wireless power reception apparatus, authentication and security information for the wireless power reception apparatus, information on a list of neighboring and/or candidate wireless power transmission apparatuses, sub-in-band channel allocation information allocated to the wireless power reception apparatus, and second frequency band access information corresponding to the wireless power reception apparatus.

In particular, when the handover request message is received, the target wireless power transmission apparatus may immediately initiate wireless power transmission without performing a separate identification procedure for the wireless power reception apparatus to be handed over. For example, if the first frequency band is a resonance frequency band, the target wireless power transmission apparatus may initiate wireless power transmission immediately without performing the beacon transmission procedure over the first frequency band upon receiving the handover request message.

In addition, the controller 1150 may generate a list of candidate wireless power transmission apparatuses based on the first to n-th reception sensitivities, and may determine a target wireless power transmission apparatus in the list of candidate wireless power transmission apparatuses. In this operation, a plurality of target wireless power transmission apparatuses may be determined. In this case, the wireless power reception apparatus may receive wireless powers from the plurality of target wireless power transmission apparatuses simultaneously upon completion of the handover.

Here, the number of target wireless power transmission apparatuses corresponding to the wireless power reception apparatus may be determined based on the power required by the wireless power reception apparatus and the available power of the target wireless power transmission apparatus.

FIG. 11 distinguishes the first communication unit 1120 from the second communication unit 1130, but this is merely an embodiment. In another embodiment, first communication unit 1120 and the second communication unit 1130 may be configured as a single module or device to perform the corresponding communication function.

The communication module may be a device including a transmitter/receiver capable of performing communication using the corresponding network.

The reception sensitivity measurement module 1140 may include a reception signal detector for detecting the reception sensitivity of a signal received by the transmitter/receiver.

The method according to an embodiment of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It will be apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

### [Industrial Applicability]

The present disclosure relates to a wireless charging technique, and may be applied to an apparatus and system for controlling wireless power transmission based on a network.

## Claims

1. A method for controlling wireless power by a wireless power transmission apparatus for wirelessly transmitting power to a wireless power reception apparatus, the method comprising:
transmitting a first signal through a first frequency band when power is applied;
measuring, when a second signal corresponding to the first signal is received through the second frequency band, a first reception sensitivity of the second signal,
receiving second to n-th reception sensitivities corresponding to the second signal from at least one other wireless power transmission apparatus connected to a network, a reception sensitivity; and
determining whether to transmit wireless power to the wireless power reception apparatus based on the first to n-th reception sensitivities.

2. The method according to claim 1, wherein, when transmission of the wireless power to the wireless power reception apparatus is determined, the wireless power is transmitted through the first frequency band.

3. The method according to claim 2, further comprising:
determining a target wireless power transmission apparatus when the first reception sensitivity falls below a reference value during transmission of the wireless power,
wherein a handover request message including characteristics and state information about the wireless power reception apparatus is transmitted to the determined target wireless power transmission apparatus over the network.

4. The method according to claim 2, further comprising:
determining a target wireless power transmission apparatus when efficiency of power transmission to the wireless power reception apparatus falls below a reference value during transmission of the wireless power,
wherein a handover request message including characteristics and state information about the wireless power reception apparatus is transmitted to the determined target wireless power transmission apparatus over the network.

5. The method according to claim 3 or 4, wherein the characteristics and state information about the wireless power reception apparatus comprises at least one of reception sensitivity information about the second signal, identification information about the wireless power reception apparatus, information about a current and a voltage required by the wireless power reception apparatus, information about a charging state of the wireless power reception apparatus, information about a version of software installed on the wireless power reception apparatus, authentication and security information about the wireless power reception apparatus, neighboring and/or candidate wireless power transmission apparatus list information corresponding to the wireless power reception apparatus, sub-in-band channel allocation information allocated to the wireless power reception apparatus, and connection information about the second frequency band corresponding to the wireless power reception apparatus.

6. The method according to claim 5, wherein, when the handover request message is received by the target wireless power transmission apparatus, the target wireless power transmission apparatus initiates transmission of the wireless power to the wireless power reception apparatus without performing a separate identification procedure for the wireless power reception apparatus.

7. The method according to claim 3, further comprising:
generating a list of candidate wireless power transmission apparatuses based on the first to n-th reception sensitivities,
wherein the target wireless power transmission apparatus is determined from the list of candidate wireless power transmission apparatuses.

8. The method according to claim 7, wherein at least one wireless power transmission apparatus included in the list of candidate wireless power transmission apparatuses is controlled to simultaneously supply the wireless power to the wireless power reception apparatus.

9. The method according to claim 1, further comprising:
transmitting the first reception sensitivity to the at least one other wireless power transmission apparatus connected to the network.

10. The method according to claim 1, wherein, when the first frequency band is a resonance frequency band, the second signal is an advertisement signal broadcast by the wireless power reception apparatus.

11. The method according to claim 1, wherein, when the first frequency band is a radio frequency band, the second signal is received on an uplink shared channel defined in the second frequency band.

12. A method for controlling wireless power by a wireless power transmission controller operatively connected with first to n-th wireless power transmission apparatuses, the method comprising:
receiving reception sensitivity information for each of wireless power reception apparatuses connected to the first to n-th wireless power transmission apparatuses;
determining at least one wireless power transmission apparatus to transmit power to the wireless power reception apparatus, using the reception sensitivity information;
calculating the power to be transmitted to the wireless power reception apparatus by each of the determined at least one wireless power transmission apparatus; and
transmitting a power transmission request message including the calculated power information to the determined wireless power transmission apparatus.

13. The method according to claim 12, further comprising:
receiving state information about the first to n-th wireless power transmission apparatuses,
wherein the determining of the at least one wireless power transmission apparatus is performed further using the state information.

14. The method according to claim 13, wherein the state information comprises at least one of information about a maximum transmission power intensity, information about the number of currently connected wireless power reception apparatuses, information about a maximum number of serviceable wireless power reception apparatuses, information about the available transmission power, and sub-in-band allocation information allocated for each of the connected wireless power reception apparatuses.

15. The method according to claim 12, wherein the determining of the at least one wireless power transmission apparatus comprises:
allocating at least one wireless power transmission apparatus having the reception sensitivity greater than or equal to a first reference value for each of the wireless power reception apparatuses to a list of candidate wireless power transmission apparatuses; and
extracting a wireless power transmission apparatus having the reception sensitivity greater than or equal to a second reference value from the list of candidate wireless power transmission apparatuses,
wherein the power transmission request message is transmitted to the extracted wireless power transmission apparatus.

16. A wireless power control system comprising:
first to n-th wireless power transmission apparatuses configured to transmit a first signal when power is applied, measure a reception sensitivity of a second signal corresponding to the first signal, and exchange information about the measured reception sensitivity over a network; and
a wireless power reception apparatus configured to broadcast the second signal when the first signal is sensed,
wherein the first to n-th wireless power transmission apparatuses determine whether to transmit power to the wireless power reception apparatus based on the exchanged reception sensitivity.

17. The system according to claim 16, wherein the first signal and the second signal are transmitted and received through different frequency bands.

18. The system according to claim 16, wherein the network is a wired or wireless IP communication network.

19. The system according to claim 16, wherein a serving wireless power transmission apparatus among the first to n-th wireless power transmission apparatuses identifies at least one candidate wireless power transmission apparatus based on the exchanged reception sensitivity, determines, when it is recognized that the reception sensitivity of the second signal is less than or equal to a reference value, a target wireless power transmission apparatus of the at least one candidate wireless power transmission apparatus, and transmits a predetermined handover request message to the determined target wireless power transmission apparatus.

20. The system according to claim 19, wherein the handover request message comprises characteristics and state information about the wireless power reception apparatus,
wherein the target wireless power transmitter does not measure the reception sensitivities of the first signal transmission and the second signal, but immediately initiates transmission of power to the wireless power reception apparatus using the characteristics and state information.

21. A wireless power transmission apparatus for wirelessly transmitting power to a wireless power reception apparatus, comprising:
a power transmission unit configured to transmit, through a first frequency band, a first signal for sensing and identifying the wireless power reception apparatus;
a first communication unit configured to receive a second signal corresponding to the first signal through a second frequency band,
a reception sensitivity measurement unit configured to measure a first reception sensitivity of the second signal;
a second communication unit configured to receive second to n-th reception sensitivities corresponding to the second signal from at least one other wireless power transmission apparatus connected to a network; and
a controller configured to determine whether to transmit wireless power to the wireless power reception apparatus based on the first to n-th reception sensitivities.

22. The wireless power transmission apparatus according to claim 21, wherein, when transmission of the wireless power to the wireless power reception apparatus is determined, the wireless power is transmitted through the first frequency band.

23. The wireless power transmission apparatus according to claim 22, wherein a target wireless power transmission apparatus is determined when the first reception sensitivity falls below a reference value during transmission of the wireless power,
wherein a handover request message including characteristics and state information about the wireless power reception apparatus is transmitted to the determined target wireless power transmission apparatus through the second communication unit.

24. The wireless power transmission apparatus according to claim 22, wherein a target wireless power transmission apparatus is determined when efficiency of power transmission to the wireless power reception apparatus falls below a reference value during transmission of the wireless power,
wherein a handover request message including characteristics and state information about the wireless power reception apparatus is transmitted to the determined target wireless power transmission apparatus through the second communication unit.

25. The wireless power transmission apparatus according to claim 23 or 24, wherein the characteristics and state information about the wireless power reception apparatus comprises at least one of reception sensitivity information about the second signal, identification information about the wireless power reception apparatus, information about a current and a voltage required by the wireless power reception apparatus, information about a charging state of the wireless power reception apparatus, information about a version of software installed on the wireless power reception apparatus, authentication and security information about the wireless power reception apparatus, neighboring and/or candidate wireless power transmission apparatus list information corresponding to the wireless power reception apparatus, sub-in-band channel allocation information allocated to the wireless power reception apparatus, and connection information about the second frequency band corresponding to the wireless power reception apparatus.

26. The wireless power transmission apparatus according to claim 25, wherein, when the handover request message is received by the target wireless power transmission apparatus, the target wireless power transmission apparatus initiates transmission of the wireless power to the wireless power reception apparatus without performing a separate identification procedure for the wireless power reception apparatus.

27. The wireless power transmission apparatus according to claim 23, wherein a list of candidate wireless power transmission apparatuses is generated based on the first to n-th reception sensitivities,
wherein the target wireless power transmission apparatus is determined from the list of candidate wireless power transmission apparatuses.

28. The wireless power transmission apparatus according to claim 27, wherein at least one wireless power transmission apparatus included in the list of candidate wireless power transmission apparatuses is controlled to simultaneously supply the wireless power to the wireless power reception apparatus.

29. The wireless power transmission apparatus according to claim 21, wherein the first transmission sensitivity is transmitted to the at least one other wireless power transmission apparatus connected to the network through the second communication unit.

30. The wireless power transmission apparatus according to claim 21, wherein, when the first frequency band is a resonance frequency band, the second signal is an advertisement signal broadcast by the wireless power reception apparatus.

31. The wireless power transmission apparatus according to claim 21, wherein, when the first frequency band is a radio frequency band, the second signal is a pilot signal or a preamble signal transmitted by the wireless power reception apparatus.

32. A computer-readable recording medium on which a program for executing the method according to any one of claims 1 to 15 is recorded.
